## Europäisches Patentamt
## European Patent Office
## Office européen des brevets

(19)

(11) **EP 1 563 905 A1**

(12) **EUROPÄISCHE PATENTANMELDUNG**

(43) Veröffentlichungstag:
**17.08.2005 Patentblatt 2005/33**

(51) Int Cl.[7]: **B01J 23/22**, B01J 35/00,
B01J 37/02, C07C 51/265,
B01J 2/16

(21) Anmeldenummer: **04003444.9**

(22) Anmeldetag: **16.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **BASF AKTIENGESELLSCHAFT 67056 Ludwigshafen (DE)**

(72) Erfinder: **Die Erfindernennung liegt noch nicht vor**

(74) Vertreter: **Reitstötter - Kinzebach Patentanwälte, Sternwartstrasse 4 81679 München (DE)**

(54) **Verfahren zur Herstellung eines Katalysators für Gasphasenoxidationen durch Beschichten von Trägermaterial in einer Fliessbettapparatur**

(57)    Die Erfindung betrifft ein Verfahren zur Herstellung eines Katalysators für Gasphasenoxidationen, bei dem man einen teilchenförmigen inerten Träger einer Gesamtmasse $M_{Träger}$ in eine Fließbettapparatur einwiegt, wenigstens eine wässrige Suspension eines katalytisch aktiven Materials oder Quellen dafür und Bindemittel mit einem Bindemittelgehalt $B_{Susp}$ bereitstellt, den inerten Träger durch Zufuhr eines auf eine Temperatur $T_{Gas}$ temperierten Gasstroms bei einem Durchfluss $Q_{Gas}$ fluidisiert, und die Suspension mit einer Dosierrate $Q_{Susp}$ auf den fluidisierten inerten Träger aufsprüht. Durch Auswahl von $Q_{Gas}$, $Q_{Susp}$, $B_{Susp}$, $M_{Träger}$, und $T_{Gas}$ innerhalb der Bereiche

$$3000 \leq Q_{Gas}\ [\mathrm{m}^3/\mathrm{h}] \leq 9000, \qquad 1000 \leq Q_{Susp}\ [\mathrm{g/min}] \leq 3500,$$

$$2 \leq B_{Susp}\ [\mathrm{Gew.\%}] \leq 18, \qquad 60 \leq M_{Träger}\ [\mathrm{kg}] \leq 240.$$

$$75 \leq T_{Gas}\ [^{\circ}\mathrm{C}] \leq 120,$$

so dass eine Kenngröße $K$, mit

$$K = 0,020\ Q_{Gas} - 0,055\ Q_{Susp} + 7,500\ B_{Susp} - 0,667\ M_{Träger} + 2,069\ T_{Gas} - 7$$

der Relation $127,5 \leq K \leq 202$ genügt, können qualitativ hochwertige Schichten erzeugt und die Bildung von sogenannten Zwillingen aus aneinanderhaftenden Trägerpartikel vermieden werden.

**EP 1 563 905 A1**

**Beschreibung**

Verfahren zur Herstellung eines Katalysators für Gasphasenoxidationen, sowie die Verwendung des Katalysators zur katalytischen Gasphasenoxidation von aromatischen Kohlenwasserstoffen zu Carbonsäuren und/oder Carbonsäureanhydriden, insbesondere zur Herstellung von Phthalsäureanhydrid aus o-Xylol, Naphthalin oder Gemischen davon.

Eine Vielzahl von Carbonsäuren und/oder Carbonsäureanhydriden wird technisch durch die katalytische Gasphasenoxidation von aromatischen Kohlenwasserstoffen, wie Benzol, den Xylolen, Naphthalin, Toluol oder Durol, in Festbettreaktoren hergestellt. Man kann auf diese Weise z. B. Benzoesäure, Maleinsäureanhydrid, Phthalsäureanhydrid, Isophthalsäure, Terephthalsäure oder Pyromellithsäureanhydrid erhalten. Im Allgemeinen leitet man ein Gemisch aus einem sauerstoffhaltigen Gas und dem zu oxidierenden Ausgangsmaterial durch Rohre, in denen sich eine Schüttung eines Katalysators befindet. Zur Temperaturregelung sind die Rohre von einem Wärmeträgermedium, beispielsweise einer Salzschmelze, umgeben.

Als Katalysatoren haben sich für diese Oxidationsreaktionen so genannte Schalenkatalysatoren bewährt, bei denen die katalytisch aktive Masse schalenförmig auf einem inerten Trägermaterial, wie Steatit aufgebracht ist. Dabei können unterschiedliche katalytisch aktive Massen in einer oder mehreren Schalen aufgebracht werden. Als katalytisch aktiver Bestandteil der katalytisch aktiven Masse dieser Schalenkatalysatoren dient im allgemeinen neben Titandioxid Vanadiumpentoxid. Des weiteren können in der katalytisch aktiven Masse in geringen Mengen eine Vielzahl anderer oxidischer Verbindungen enthalten sein, die als Promotoren die Aktivität und Selektivität des Katalysators beeinflussen.

Zur Herstellung derartiger Schalenkatalysatoren wird eine wässrige Suspension der Aktivmassenbestandteile und/oder deren Vorläuferverbindungen oder Quellen auf das Trägermaterial bei erhöhter Temperatur aufgesprüht, bis der gewünschte Aktivmassenanteil am Katalysatorgesamtgewicht erreicht ist. Hierzu eignen sich insbesondere sogenannte Wirbelschicht- bzw. Fließbettapparate. In diesen Vorrichtungen wird das Trägermaterial in einem aufsteigenden Gasstrom, insbesondere Luft, fluidisiert. Die Apparate bestehen meist aus einem konischen oder kugelförmigen Behälter, bei dem das fluidisierende Gas von unten oder von oben über ein Zentralrohr eingeführt wird. Die Suspension wird über Düsen von oben, seitlich oder von unten in die Wirbelschicht eingesprüht. Vorteilhaft ist der Einsatz eines mittig bzw. konzentrisch um das Zentralrohr angeordneten Leitrohrs. Innerhalb des Leitrohrs herrscht eine höhere Gasgeschwindigkeit, welche die Trägerpartikel nach oben transportiert. Im äußeren Ring liegt die Geschwindigkeit nur wenig oberhalb der Lockerungsgeschwindigkeit. So die Geschwindigkeit nur wenig oberhalb der Lockerungsgeschwindigkeit. So werden die Partikel kreisförmig vertikal bewegt.

Ein geeigneter Fließbettapparat ist beispielsweise in der DE-A 40 06 935 beschrieben.

Um die Qualität der Beschichtung zu verbessern, wurde in der Technik dazu übergegangen, der Suspension organische Binder, bevorzugt Copolymere, vorteilhaft in Form einer wässrigen Dispersion, von Vinylacetat/Vinyllaurat, Vinylacetat/Acrylat, Styrol/Acrylat sowie Vinylacetat/Ethylen zuzusetzen. Der Binderzusatz hat zudem den Vorteil, dass die Aktivmasse gut auf dem Träger haftet, so dass Transport und Einfüllen des Katalysators erleichtert werden.

Bei der thermischen Behandlung bei Temperaturen über 80 bis 450 °C entweicht der Binder durch thermische Zersetzung und/oder Verbrennung aus der aufgetragenen Schicht. Meist erfolgt die thermische Behandlung in situ im Oxidationsreaktor.

Die Qualität der so erhältlichen Trägerkatalysatoren, insbesondere die Beschichtungsqualität, hängt entscheidend von Betriebsparameter der Fließbettapparatur ab, insbesondere von der Gesamtmasse des Trägermaterials in der Apparatur, des Bindemittelgehalts der eingesprühten Suspension, des Durchflusses und der Temperatur des zur Verwirbelung eingeblasenen Gasstroms und Dosierrate, mit der man die Suspension auf den fluidisierten inerten Träger aufsprüht. Die Einstellung der wichtigsten Betriebsparameter der Fließbettapparatur zur Beschichtung der Trägermaterialien erfolgt im Stand der Technik durch aufwändige empirische Testreihen, die bereits im Produktionsmaßstab erfolgen müssen, da eine Skalierung vom Labor- oder Technikumsmaßstab auf den Produktionsmaßstab wegen fehlender oder unzureichender theoretischer Modelle praktisch nicht möglich ist.

In WO 98 14274 ist ein Verfahren zur Herstellung eines Trägerkatalysators in einer Fließbettapparatur beschrieben, bei dem eine weniger dünne 100 µm Schicht einer Aktivmasse in wässrige Suspension auf einen inerten Träger von 5 µm - 20 mm Durchmesser aufgebracht wird.

WO 02 096557 beschreibt ein Verfahren zur Herstellung in einer Fließbettapparatur von geträgerten metallischen Nanopartikeln als Katalysatoren.

US 4 977 126 beschreibt ein Verfahren zur Herstellung von Trägerkatalysatoren in einer Fließbettapparatur, bei dem die Katalysatoren aus metallischer Cobalt-Schicht auf Oxid-Trägern besteht.

FR 2 791 905 beschreibt ein Verfahren zur Herstellung von Trägerkatalysatoren, bei dem die Suspension aus feinen Partikeln mit 10-100 µm Durchmesser und einer Dichte von mehr als 1000 kg/m$^3$ besteht und etwa 30% größerer Partikeln mit Durchmessern von 0,4 - 1 mm enthielt.

Allerdings werden in diesen Dokumenten weder Katalysatoren für Gasphasenoxidationen, noch die Beschichtung von Ringen beschrieben.

Der Erfindung liegt daher das technische Problem zugrunde, ein Verfahren zur Herstellung eines Katalysators für Gasphasenoxidationen in einer Fließbettapparatur anzugeben, bei dem man ohne aufwändige Vorversuche eine gleichmäßige und reproduzierbare Beschichtung eines Trägermaterials erhält.

Überraschend wurde gefunden, dass man dieses technische Problem lösen kann, wenn man die in die Apparatur eingewogene Menge an Trägermaterial, den Durchfluss und die Temperatur des zugeführten Gasstroms, sowie die Dosierrate und den Bindemittelgehalt der eingesprühten Suspension aus bestimmten vorgegeben Bereichen, so wählt, dass diese Parameter eine einfache empirisch ermittelte mathematische Relation erfüllen.

Die Erfindung betrifft ein Verfahren zur Herstellung eines Katalysators für Gasphasenoxidation, bei dem man einen teilchenförmigen inerten Träger einer Gesamtmasse $M_{Träger}$ in eine Fließbettapparatur einwiegt, wenigstens eine wässrige Suspension eines katalytisch aktiven Materials oder Quellen dafür und Bindemittel mit einem Bindemittelgehalt $B_{Susp}$ bereitstellt, den inerten Träger durch Zufuhr eines auf eine Temperatur $T_{Gas}$ temperierten Gasstroms bei einem Durchfluss $Q_{Gas}$ fluidisiert, und die Suspension mit einer Dosierrate $Q_{Susp}$ auf den fluidisierten inerten Träger aufsprüht.

Erfindungsgemäß wählt man $Q_{Gas}$, $Q_{Susp}$, $B_{Susp}$, $M_{Träger}$, und $T_{Gas}$ innerhalb der Bereiche

$3000 \leq Q_{Gas}$ [m$^3$/h] $\leq 9000$, $\quad 1000 \leq Q_{Susp}$ [g/min] $\leq 3500$,

$2 \leq B_{Susp}$ [Gew.%] $\leq 18$, $\quad 60 \leq M_{Träger}$ [kg] $\leq 240$.

$75 \leq T_{Gas}$ [°C] $\leq 120$

so aus, dass eine Kenngröße K, die definiert ist als

$K = 0,020\ Q_{Gas} - 0,055\ Q_{Susp} + 7,500\ B_{Susp} - 0,667\ M_{Träger} + 2,069\ T_{Gas} - 7$

der Relation 127, 5 ≤ K ≤ 202 genügt.

Wenn die Betriebsparameter diese Relation erfüllen, werden qualitativ hochwertige Schichten erzeugt. Insbesondere wird die Bildung von sogenannten Zwillingen vermeiden, d.h. von aneinanderhaftenden Trägerkörpern, die beispielsweise wegen unzureichender Trocknung oder zuviel Bindemittel entstehen können. Ferner tritt kein oder nur sehr geringer Abrieb durch aufgeplatzte Schichten auf. Auch die Schichten selbst sind sowohl bei Beschichtung der Träger mit einer Schicht als auch mit zwei Schichten gleichmäßiger, als bei einem Beschichtungsverfahren, bei dem ein oder mehre Parameter die obige Relation nicht erfüllen.

Auch die mechanische Stabilität der Schicht auf dem Träger ist verbessert.

Beim erfindungsgemäßen Verfahren erfolgt das Aufbringen der Schicht(en) des Schalenkatalysators durch beispielsweise durch Aufsprühen einer Suspension von TiO$_2$ und V$_2$O$_5$, die gegebenenfalls Quellen der unten genannten Promotorelemente enthält, auf den fluidisierten Träger. Vorzugsweise enthält die katalytisch aktive Masse im calcinierten Zustand, bezogen auf die Gesamtmenge der katalytisch aktiven Masse, 1 bis 40 Gew.-% Vanadiumoxid, berechnet als V$_2$O$_5$, und 60 bis 99 Gew.-% Titandioxid, berechnet als TiO$_2$.

Als Vanadium-Quelle wird vorzugsweise pulveriges Vanadiumpentoxid (V$^{5+}$) sowie gelöstes Vanadium, z. B. Vanadyloxalat (V$^{4+}$) verwendet. Geeignete Ausgangsverbindungen für das Element Vanadium sind z.B. Vanadiumoxide wie Vanadiumpentoxid (V$_2$O$_5$), Vanadate wie Ammoniumrnetavanadat, Vanadiumoxysulfathydrat, Vanadylacetylacetonat, Vanadinhalogenide wie Vanadintetrachlorid (VCl$_4$) und Vanadinoxyhalogenide wie VOCl$_3$. Dabei können als Vanadiumausgangsverbindungen auch solche mitverwendet werden, die Vanadium in der Oxidationsstufe +4 enthalten, oder die Vanadium in der Oxidationsstufe +5 und verschiedene Reduktionsmittel enthalten (z.B. NH$_4^+$, bzw. dessen Zersetzungsprodukt NH$_3$), die V$^{5+}$ zu V$^{4+}$ reduzieren können. Ein solches Reduktionsmittel können auch Oxalsäure, Oxalat, Hydrazindihydrochlorid, Hydrazinsulfat, Hydrazin(Monohydrat), Hydroxylamin, Hydroxylaminhydrochlorid oder deren Salze sein.

Die katalytisch aktive Masse kann daneben bis zu 1 Gew.-% einer Cäsiumverbindung, berechnet als Cs, bis zu 1 Gew.-% einer Phosphorverbindung, berechnet als P und bis zu 10 Gew.-% Antimonoxid, berechnet als Sb$_2$O$_3$ enthalten.

Neben den fakultativen an Zusätzen Cäsium und Phosphor können im Prinzip in der katalytisch aktiven Masse in geringen Mengen eine Vielzahl anderer oxidischer Verbindungen enthalten sein, die als Promotoren die Aktivität und Selektivität des Katalysators beeinflussen, beispielweise indem sie seine Aktivität absenken oder erhöhen. Als solche Promotoren seien beispielhaft die Alkalimetalloxid, insbesondere außer dem genannten Cäsiumoxid, Lithium-, Kalium- und Rubidiumoxid, Thallium(I)oxid, Aluminiuoxid, Zirkoniumoxid, Eisenoxid, Nickeloxid, Kobaltoxid, Manganoxid, Zinnoxid, Silberoxid, Kupferoxid, Chromoxid, Molybdänoxid, Wolframoxid, Iridiumoxid, Tantaloxid, Nioboxid, Arsenoxid, Ceroxid genannt. In der Regel wird aus dieser Gruppe Cäsium als Promotor verwendet.

Ferner kommen von den genannten Promotoren noch bevorzugt als Zusätze die Oxide von Niob und Wolfram in Mengen von 0,01 bis 0,50 Gew.-%, bezogen auf die katalytisch wirksame Masse in Betracht. Als die Aktivität erhöhenden aber die Selektivität vermindernden Zusatz kommen vor allem oxidische Phosphorverbindungen insbesondere Phosphorpentoxid in Betracht.

Vor der Beschichtung wird die Suspension vorzugsweise ausreichend lange, z.B. 2 bis 30 Stunden, insbesondere 12 bis 25 Stunden, gerührt, um Agglomerate der suspendierten Feststoffe aufzubrechen und eine homogene Suspension zu erhalten. Die Suspension hat typischerweise einen Feststoffgehalt von 20 bis 50 Gew.-%. Das Suspensionsmedium ist im Allgemeinen wässrig, z. B. Wasser selbst oder ein wässriges Gemisch mit einem wassermischbaren organischen Lösungsmittel, wie Methanol, Ethanol, Isopropanol, Formamid und dergleichen. Wenn die erste oder zweite Suspension $TiO_2$- und $V_2O_5$-Teilchen als Katalysatorteilchen weisen vorzugsweise wenigstens 90 Vol.-% der $V_2O_5$-Teilchen einen Durchmesser von 20 μm oder weniger und wenigstens 95 Vol.-% der $V_2O_5$-Teilchen einen Durchmesser von 30 μm oder weniger auf.

In der Regel werden der Suspension organische Binder, bevorzugt Copolymere, vorteilhaft in Form einer wässrigen Dispersion, von Vinylacetat/Vinyllaurat, Vinylacetat/Acrylat, Styrol/Acrylat sowie Vinylacetat/Ethylen zugesetzt. Die Binder sind als wässrige Dispersionen handelsüblich, mit einem Feststoffgehalt von z. B. 35 bis 65 Gew.-%. Die eingesetzte Menge solcher Binderdispersionen beträgt erfindungsgemäß 2 bis 18 Gew.-%. bezogen auf das Gewicht der Suspension.

Bei der Beschichtung des Katalysatorträgers mit der katalytisch aktiven Masse werden erfindungsgemäß Beschichtungstemperaturen von 75 bis 120°C angewandt, wobei die Beschichtung unter Atmosphärendruck oder unter reduziertem Druck erfolgen kann.

Die Schichtdicke der katalytisch aktiven Masse beträgt in der Regel 0,02 bis 0,25 mm, vorzugsweise 0,05 bis 0,20 mm. Der Aktivmasseanteil am Katalysator beträgt üblicherweise 5 bis 25 Gew.-%, meist 7 bis 15 Gew.-%.

Durch thermische Behandlung des so erhaltenen Präkatalysators bei Temperaturen über 80 bis 450 °C entweicht das Bindemittel durch thermische Zersetzung und/oder Verbrennung aus der aufgetragenen Schicht. Vorzugsweise erfolgt die thermische Behandlung in situ im Gasphasenoxidationsreaktor.

Bevorzugt liegt die Kennzahl K in einem Bereich von $136{,}0 \leq K \leq 193{,}5$ liegt und es sind

$$4500 \leq Q_{Gas}\,[\text{m}^3/\text{h}] \leq 7500, \qquad 1500 \leq Q_{Susp}\,[\text{g/min}] \leq 3000,$$
$$5 \leq B_{Susp}\,[\text{Gew.\%}] \leq 15, \qquad 100 \leq M_{Träger}\,[\text{kg}] \leq 200, \text{ und}$$
$$80 \leq T_{Gas}\,[°C] \leq 115.$$

Besonders bevorzugt liegt die Kennzahl K in einem Bereich von $143 \leq K \leq 184{,}5$ liegt und es sind

$$5500 \leq Q_{Gas}\,[\text{m}^3/\text{h}] \leq 6500, \qquad 2000 \leq Q_{Susp}\,[\text{g/min}] \leq 2500,$$
$$6 \leq B_{Susp}\,[\text{Gew.\%}] \leq 11 \qquad 120 \leq M_{Träger}\,[\text{kg}] \leq 180,$$
$$90 \leq T_{Gas}\,[°C] \leq 115.$$

Zum Verwirbeln und temperieren der Trägermaterialschüttung in der Fließbettapparatur kann jedes bei den Betriebbedingungen inertes Gas oder Gasgemisch verwendet werden. Vorteilhaft ist das zugeführte Gas aber Luft, was einen besonders kostengünstigen Betrieb der Anlage ermöglicht.

Die katalytisch aktive Masse kann auch in zwei oder mehreren Schichten aufgebracht sein. Vorzugsweise besitzen die Schichten unterschiedliche Selektivität und Aktivität. Beispielsweise kann die innere Schicht oder die inneren Schichten einen Antimonoxidgehalt von bis zu 15 Gew.-% und die äußere Schicht einen um 50 bis 100% verringerten Antimonoxidgehalt aufweisen. Beispielsweise kann die innere Schicht und äußere Schicht unterschiedliche P-Menge enthalten. Zu Herstellung von Katalysatoren mit zwei Schichten stellt man erfindungsgemäß eine zweite wässrige Suspension aus katalytisch aktivem Material und Bindemittel bereit und sprüht sie auf den mit der ersten Suspension beschichteten fluidisierten Träger auf.

Als inertes Trägermaterial können praktisch alle Trägermaterialien des Standes der Technik, wie sie vorteilhaft bei der Herstellung von Schalenkatalysatoren für die Oxidation aromatischer Kohlenwasserstoffe zu Aldehyden, Carbonsäuren und/oder Carbonsäureanhydriden eingesetzt werden, Verwendung finden, beispielsweise Quarz ($SiO_2$), Porzellan, Magnesiumoxid, Zinndioxid, Siliciumcarbid, Rutil, Tonerde ($Al_2O_3$), Aluminiumsilikat, Steatit (Magnesiumsilikat), Zirkoniumsilikat, Cersilikat oder Mischungen dieser Trägermaterialien. Das Trägermaterial ist in der Regel nicht-porös. Der Ausdruck "nicht-porös" ist dabei im Sinne von "bis auf technisch unwirksame Mengen an Poren nicht-porös" zu verstehen, da technisch unvermeidlich eine geringe Anzahl Poren im Trägermaterial, das idealerweise keine Poren enthalten sollte, vorhanden sein können. Als vorteilhafte Trägermaterialien sind insbesondere Steatit und Siliciumcarbid hervorzuheben. Die Form des Trägermaterials ist für die erfindungsgemäßen Präkatalysatoren und Schalenkatalysatoren im Allgemeinen nicht kritisch. Beispielsweise können Katalysatorträger in Form von Kugeln, Ringen, Tabletten, Spiralen, Röhren, Extrudaten oder Splitt verwendet werden. Die Dimensionen dieser Katalysatorträger entsprechen denen üblicherweise zur Herstellung von Schalenkatalysatoren für die Gasphasenpartialoxidation von aromatischen Kohlenwasserstoffen verwendeten Katalysatorträgern. Bevorzugt wird Steatit in Form von Kugeln mit einem äußeren Durchmesser von 0,5 bis 10 mm oder Ringen mit einem äußeren Durchmesser von 3 bis 15 mm verwendet.

Besonders bevorzugt führt man das erfindungsgemäße Verfahren in einer Fließbettapparatur durch, die einen Behälter zu Aufnahme des teilchenförmigen Trägers, in dessen unterem Bereich eine schüsselartige Vertiefung vorgesehen ist, ein Zentralrohr zur Zufuhr des Gases, das sich in dem Behälter im wesentlichen axial nach unten erstreckt und in die Vertiefung mündet, einen im wesentlichen ringförmigen Abweisschirm, der in dem oberen Bereich des Behälters an dem Zentralrohr befestigt ist, und einen in dem unteren Bereich des Behälters angeordneten Leitring, der das Zentralrohr auf einem Teil seiner Länge im wesentlich konzentrisch umgibt, und Mitteln zum Einsprühen der ersten und gegebenenfalls zweiten Suspension umfasst. Eine solche Fließbettapparatur ist beispielsweise in der deutschen Patentanmeldung DE 40 06 935 beschrieben. Kommerziell erhältliche Fließbettapparturen, die sich zur Durchführung des erfindungsgemäßen Verfahrens eigenen sind beispielsweise die Kugel-Coater HKC 150 und HKC 200 der Fa. Hüttlin, Steinen, Deutschland.

Die erfindungsgemäßen Katalysatoren eignen sich generell zur Gasphasenoxidation aromatischer $C_6$- bis $C_{10}$-Kohtenwasserstoffe, wie Benzol, den Xylolen, Toluol, Naphthalin oder Durol (1,2,4,5-Tetramethylbenzol) zu Carbonsäuren und/oder Carbonsäureanhydriden wie Maleinsäureanhydrid, Phthalsäureanhydrid, Benzoesäure und/oder Pyromellithsäuredianhydrid. Gegenstand der Erfindung ist daher auch die Verwendung des nach dem erfindungsgemäßen Verfahren hergestellten Katalysators zur Herstellung von Phthalsäureanhydrid aus o-Xylol, Naphthalin oder Gemischen davon.

Zu diesem Zweck werden die erfindungsgemäß hergestellten Katalysatoren in von außen auf die Reaktionstemperatur, beispielsweise mittels Salzschmelzen, thermostatisierte Reaktionsrohre gefüllt und die SalzbadTemperaturen von im allgemeinen 300 bis 450 °C, vorzugsweise von 320 bis 420 °C und besonders bevorzugt von 340 bis 400 °C und bei einem Überdruck von im allgemeinen 0,1 bis 2,5 bar, vorzugsweise von 0,3 bis 1,5 bar mit einer Raumgeschwindigkeit von im allgemeinen 750 bis 5000 $h^{-1}$ geleitet. Das dem Katalysator zugeführte Reaktionsgas wird im allgemeinen durch Vermischen von einem molekularen Sauerstoff enthaltenden Gas, das außer Sauerstoff noch geeignete Reaktionsmoderatoren und/oder Verdünnungsmittel, wie Dampf, Kohlendioxid und/oder Stickstoff, enthalten kann, mit dem zu oxidierenden, aromatischen Kohlenwasserstoff erzeugt, wobei das molekularen Sauerstoff enthaltende Gas im allgemeinen 1 bis 100 mol-%, vorzugsweise 2 bis 50 mol-% und besonders bevorzugt 10 bis 30 mol-% Sauerstoff, 0 bis 30 mol-%, vorzugsweise 0 bis 10 mol-% Wasserdampf sowie 0 bis 50 mol-%, vorzugsweise 0 bis 1 mol-% Kohlendioxid, Rest Stickstoff, enthalten kann. Zur Erzeugung des Reaktionsgases wird das molekularen Sauerstoff enthaltende Gas im allgemeinen mit 30 g bis 150 g je $Nm^3$ Gas des zu oxidierenden, aromatischen Kohlenwasserstoffs beschickt. Es hat sich als besonders vorteilhaft erwiesen, wenn in der Katalysatorschüttung Katalysatoren eingesetzt werden, die sich in ihrer katalytischen Aktivität und/oder chemischen Zusammensetzung ihrer Aktivmasse unterscheiden. Üblicherweise wird bei Anwendung zweier Reaktionszonen in der ersten, also zum Gaseintritt des Reaktionsgases hin gelegenen Reaktionszone, ein Katalysator eingesetzt, der in Vergleich zum Katalysator, welcher sich in der zweiten, also zum Gasaustritt hin gelegenen Reaktionszone, befindet, eine etwas geringere katalytische Aktivität hat. Im allgemeinen wird die Umsetzung durch die Temperatureinstellung so gesteuert, dass in der ersten Zone der größte Teil der im Reaktionsgas enthaltenen aromatischen Kohlenwasserstoff bei maximaler Ausbeute umgesetzt wird. Vorzugsweise werden drei- bis fünflagige Katalysatorsysteme verwendet, insbesondere drei- und vierlagige Katalysatorsysteme.

Die Erfindung wird durch die folgenden Beispiele näher veranschaulicht.

Beispiel 1 (Einschalenkatalysator auf herkömmlichen Trägerringen):

47,44 kg Anatas (BET- Oberfläche 9 $m^2$/g), 20,34 kg Anatas (BET- Oberfläche 20 $m^2$/g), 5,32 kg Vanadiumpentoxid, 1,33 kg Antimonoxid, 0,30 kg Cäsiumcarbonat wurden in 195 entionisiertem Wasser suspendiert und 18 Stunden gerührt, um eine homogene Verteilung zu erzielen. Zu dieser Suspension wurden 30,6 kg organischer Binder, bestehend aus einem Copolymer aus Vinylacetat und Vinyllaurat in Form einer 50 Gew.-%igen wäßerigen Dispersion zugegeben.

In einer Fließbettapparatur (Hüttlin HKC 150) wurden 60 kg dieser Suspension auf 150 kg Steatit (Magnesiumsilikat) in Form von Ringen mit Abmessungen von 7 mm x 7 mm x 4 mm (Außendurchmesser x Höhe x Innendurchmesser) aufgesprüht und getrocknet. Die Betriebsparameter waren

| | |
|---|---|
| Luftdurchfluss; | 6000 $m^3$/h |
| Dosierrate: | 2250 g / min |
| Bindemittelkonzentration | 10 Gew.-% der gesamten eingesetzten Suspension |
| Trägereinwaage | 150 kg Steatit-Ringe (7 mm x 7 mm x 4 mm) |
| Zulufttemperatur: | 109°C |

Die auf diese Weise aufgebrachte katalytisch aktive Masse, also die Katalysatorschale, enthielt nach einer Stunde Calcination auf 450°C 7,12 Gew.-% Vanadium (berechnet als $V_2O_5$), 1,8 Gew.-% Antimon (berechnet als $Sb_2O_3$), 0,33 Gew.-% Cäsium (berechnet als Cs), 90,75 Gew.-% Titandioxid. Das Gewicht der aufgetragenen Schale betrug 8,0 % des Gesamtgewichtes des fertigen Katalysators.

Die Kennzahl K, die aus der Gleichung des Anspruchs 1 berechnet wurde, beträgt 188,5.

Der Abrieb nach dreifachem Falltest betrug 25 Gew.-% (nach 1 h Calcination bei 450°C). Bei dem Falltest wurden ca. 50 g Katalysator (calciniert nach einstündiger Wärmebehandlung bei 450°C) durch ein 3 m langes Rohr mit lichtem Durchmesser von 25 mm fallengelassen. Der Katalysator fällt in eine unter dem Rohr stehende Schale, wird von dem bei Aufschlag entstehenden Staub abgetrennt und wieder durch das Rohr fallengelassen. Der Gesamtmassenverlust nach dreimaligem Falltest bzgl. der aufgetragenen Aktivmassenmenge, die 100% entspricht ist ein Maß für die Abriebsfestigkeit des Katalysators.

Verqleichsbeispiel 2:

Der Katalysator wurde präpariert wie in Beispiel 1, wobei die Betriebsbedingungen der Fließbettapparatur wie folgt eingestellt wurden:

| Luftdurchfluss: | 6000 m³/h |
|---|---|
| Dosierrate: | 2250 g / min |
| Bindemittelkonzentration | 10 Gew.-% der gesamten eingesetzten Suspension |
| Trägereinwaage | 150 kg Steatit-Ringe (7 mm x 7 mm x 4 mm) |
| Zulufttemperatur: | 70°C |

Die Kennzahl K, die aus der Gleichung des Anspruchs 1 berechnet wurde, beträgt 107,8.
Bei einer Zulufttemperatur, die unterhalb des erfindungsgemäßen Bereichs lag, wurden viele Zwillingsringe gefunden, die offenbar wegen unzureichender Trocknung entstanden sind. Der Abrieb nach dreifachem Falltest (Falltest wie in Beispiel 1) betrug 40%.

Vergleichsbeispiel 3:

Der Katalysator wurde präpariert wie in Beispiel 1, wobei die Betriebsbedingungen der Fließbettapparatur wie folgt eingestellt wurden:

| Luftdurchfluss: | 6000 m³/h |
|---|---|
| Dosierrate: | 2250 g / min |
| Bindemittelkonzentration | 20 Gew.-% der gesamten eingesetzten Suspension |
| Trägereinwaage | 150 kg Steatit-Ringe (7 mm x 7 mm x 4 mm) |
| Zulufttemperatur: | 109°C |

Die Kennzahl K, die aus der Gleichung des Anspruchs 1 berechnet wurde, beträgt 263,5.
Auch bei einer Bindemittelkonzentration, die über dem erfindungsgemäß vorgesehenen Bereich lag, fand man vielen Zwillingsringe. Der Abrieb nach dreifachem Falltest (Falltest wie in Beispiel 1) betrug 40%.

Beispiel 4 (Einschalenkatalysator auf größeren Trägerringen):

150 kg Steatit in Form von Ringen mit Abmessungen von 8 mm x 6 mm x 5 mm (Außendurchmesser x Höhe x Innendurchmesser) wurden in einer Fließbettapparatur (Hüttlin HKC 150) erhitzt und mit 57 kg einer Suspension aus 140,02 kg Anatas mit einer BET-Oberfläche von 21 m²/g, 11,776 kg Vanadiumpentoxid, 31,505 kg Oxalsäure, 5,153 kg Antimontrioxid, 0,868 kg Ammoniumhydrogenphosphat, 0,238 g Cäsiumsulfat, 215,637 kg Wasser und 44,808 kg Formamid, zusammen mit 33,75 kg eines organischen Binders, bestehend aus einem Copolymer von Acrylsäure/ Maleinsäure (Gewichtsverhältnis 75:25) besprüht, bis das Gewicht der aufgetragenen Schicht 10,5 % des Gesamtgewichts des fertigen Katalysators betrug (nach einstündiger Wärmebehandlung bei 450°C). Die auf diese Weise aufgebrachte katalytisch aktive Masse, also die Katalysatorschale, bestand im Mittel aus 0,15 Gew.-% Phosphor (berechnet als P), 7,5 Gew.-% Vanadium (berechnet als $V_2O_5$), 3,2 Gew.-% Antimon (berechnet als $Sb_2O_3$), 0,1 Gew.-% Cäsium (berechnet als Cs) und 89,05 Gew.-% Titandioxid. Die Betriebsbedingungen der Fließbettapparatur waren:

| Luftdurchfluss: | 6500 m³/h |
|---|---|
| Dosierrate: | 2250 g / min |
| Bindemittelkonzentration | 7,5 Gew.-% der gesamten eingesetzten Suspension |
| Trägereinwaage | 150 kg Steatit-Ringe (8 mm x 6 mm x 5 mm) |
| Zulufttemperatur: | 97°C |

Die Kennzahl K, die aus der Gleichung im Anspruch 1 berechnet wurde, beträgt 154,9.Der Abrieb nach dreifachem Falltest (Falltest wie in Beispiel 1) betrug 5 Gew.-% (nach 1 h Calcination bei 450°C).

Vergleichsbeispiel 5:

Der Katalysator wurde präpariert wie in Beispiel 4, wobei 19 kg von der Suspension besprüht wurde und die Betriebsbedingungen der Fließbettapparatur wie folgt eingestellt wurden:

| Luftdurchfluss: | 6500 m$^3$/h |
|---|---|
| Dosierrate: | 2250 g / min |
| Bindemittelkonzentration | 7,5 Gew.-% der gesamten eingesetzten Suspension |
| Trägereinwaage | 50 kg Steatit-Ringe (8 mm x 6 mm x 5 mm) |
| Zulufttemperatur: | 97°C |

Die Kennzahl K, die aus der Gleichung im Anspruch 1 berechnet wurde, beträgt 221,6.

In diesem Vergleichsbeispiel, bei dem die Einwage an Trägermaterial unterhalb des erfindungsgemäß vorgesehenen Bereichs lag, wurden wieder vielen Zwillingsringe gefunden. Der Abrieb nach dreifachem Falltest (Falltest wie in Beispiel 1) betrug 34%.

Vergleichsbeispiel 6:

Der Katalysator wurde präpariert wie in Beispiel 4, wobei die Betriebsbedingungen der Fließbettapparatur wie folgt eingestellt wurden:

| Luftdurchfluss: | 6500 m$^3$/h |
|---|---|
| Dosierrate: | 900 g / min |
| Bindemittelkonzentration | 7,5 Gew.-% der gesamten eingesetzten Suspension |
| Trägereinwaage | 150 kg Steatit-Ringe (8 mm x 6 mm x 5 mm) |
| Zulufttemperatur: | 97°C |

Die Kennzahl K, die aus der Gleichung im Anspruch 1 berechnet wurde, beträgt 229,9.

Bei zu geringer Dosierrate der Suspension wurden vielen abgeplatzte Schichtkatalysatoren gefunden. Der Abrieb nach dreifachem Falltest (Falltest wie in Beispiel 1) betrug 51%.

Beispiel 7: Zweischalenkatalysator

Suspension 1:

150 kg Steatit in Form von Ringen mit Abmessungen von 8 mm x 6 mm x 5 mm (Außendurchmesser x Höhe x Innendurchmesser) wurden in einer Fließbettapparatur (Hüttlin HKC 150) erhitzt und mit 24 kg einer Suspension aus 155,948 kg Anatas mit einer BET-Oberfläche von 21 m$^2$/g, 13,193 kg Vanadiumpentoxid, 35,088 kg Oxalsäure, 5,715 kg Antimontrioxid, 0,933 kg Ammoniumhydrogenphosphat, 0,991 g Cäsiumsulfat, 240,160 kg Wasser und 49,903 kg Formamid, zusammen mit 37,5 kg eines organischen Binders, bestehend aus einem Copolymer von Acrylsäure/Maleinsäure (Gewichtsverhältnis 75:25) besprüht.

Suspension 2:

150 kg des erhaltenen Schalenkatalysators wurden in Fließbettapparatur erhitzt und mit 24 kg einer Suspension aus 168,35 kg Anatas mit einer BET-Oberfläche von 21 m$^2$/g, 7,043 kg Vanadiumpentoxid, 19,080 kg Oxalsäure, 0,990 g Cäsiumsulfat, 238,920 kg Wasser und 66,386 kg Formamid, zusammen mit 37,5 kg eines organischen Binders, bestehend aus einem Copolymer von Acrylsäure/Maleinsäure (Gewichtsverhältnis 75:25) besprüht.

Betriebsbedingungen der Fließbettapparatur beim Aufsprühen beider Schichten:

| Luftdurchfluss: | 6500 m$^3$/h |
|---|---|
| Dosierraten: | jeweils 2250 g / min |
| Bindemittelkonzentration | 7,5 Gew.-% der gesamten eingesetzten Suspension |
| Trägereinwaage | 150 kg Steatit-Ringe (8 mm x 6 mm x 5 mm) |
| Zulufttemperatur: | 97°C |

Die Kennzahl K, die aus der Gleichung im Anspruch 1 berechnet wurde, beträgt 154,9.

Das Gewicht der aufgetragenen Schichten betrug 9,3 % des Gesamtgewichts des fertigen Katalysators (nach einstündiger Wärmebehandlung bei 450 °C). Die auf diese Weise aufgebrachte katalytisch aktive Masse, also die Katalysatorschalen, bestand im Mittel aus 0,08 Gew.-% Phosphor (berechnet als P), 5,75 Gew.-% Vanadium (berechnet als $V_2O_5$), 1,6 Gew.-% Antimon (berechnet als $Sb_2O_3$), 0,4 Gew.-% Cäsium (berechnet als Cs) und 92,17 Gew.-% Titandioxid.

Der Abrieb nach dreifachem Falltest (Falltest wie in Beispiel 1) betrug 10 Gew.-% (nach 1 h Calcination bei 450°C).

Vergleichsbeispiel 8:

Ein Zweischalenkatalysator wurde präpariert wie in Beispiel 7, wobei die Betriebsbedingungen der Fließbettapparatur wie folgt eingestellt wurden:

| | |
|---|---|
| Luftdurchfluss: | 2900 m$^3$/h |
| Dosierrate: | 2250 g / min |
| Bindemittelkonzentration | 7,5 Gew.-% der gesamte eingesetzten Suspension |
| Einwaage | 150 kg Steatit-Ringen (8 x 6 x 5 mm) |
| Zulufttemperatur: | 97°C |

Die Kennzahl K, die aus der Gleichung im Anspruch 1 berechnet wurde, beträgt 82,9.

Bei zu geringem Luftdurchfluss wurden vielen Zwillingsringe und Katalysatoren mit abgeplatzten Schichten gefunden. Der Abrieb nach dreifachem Falltest (Falltest wie in Beispiel 1) betrug 64%.

Vergleichsbeispiel 9:

Ein Zweischichtkatalysator wurde präpariert wie in Beispiel 7, wobei die Betriebsbedingungen der Fließbettapparatur wie folgt eingestellt wurden:

| | |
|---|---|
| Luftdurchfluss: | 6500 m$^3$/h |
| Dosierrate: | 2250 g / min |
| Bindemittelkonzentration | 7,5 Gew.-% der gesamten eingesetzten Suspension |
| Trägereinwaage | 150 kg Steatit-Ringe (8 mm x 6 mm x 5 mm) |
| Zulufttemperatur: | 125°C |

Die Kennzahl K, die aus der Gleichung im Anspruch 1 berechnet wurde, beträgt 212,8.

Bei zu hoher Temperatur der zugeführten Luft fand man viele Katalysatoren mit abgeplatzten Schichten gefunden. Der Abrieb nach dreifachem Falltest (Falltest wie in Beispiel 1) betrug 65%.

**Patentansprüche**

1. Verfahren zur Herstellung eines Katalysators für Gasphasenoxidationen, bei dem man
   einen teilchenförmigen inerten Träger einer Gesamtmasse $M_{Träger}$ in eine Fließbettapparatur einwiegt,
   wenigstens eine wässrige Suspension eines katalytisch aktiven Materials oder Quellen dafür und Bindemittel mit einem Bindemittelgehalt $B_{Susp}$ bereitstellt,
   den inerten Träger durch Zufuhr eines auf eine Temperatur $T_{Gas}$ temperierten Gasstroms bei einem Durchfluss $Q_{Gas}$ fluidisiert, und
   die Suspension mit einer Dosierrate $Q_{Susp}$ auf den fluidisierten inerten Träger aufsprüht,
   wobei man $Q_{Gas}$, $Q_{Susp}$, $B_{Susp}$, $M_{Träger}$, und $T_{Gas}$ innerhalb der Bereiche
   $3000 \leq Q_{Gas}$ [m$^3$/h] $\leq 9000$,      $1000 \leq Q_{Susp}$ [g/min] $\leq 3500$,
   $2 \leq B_{Susp}$ [Gew.%] $\leq 18$,      $60 \leq M_{Träger}$ [kg] $\leq 240$.
   $75 \leq T_{Gas}$ [°C] $\leq 120$
   so auswählt, dass eine Kenngröße K mit
   $K = 0,020\ Q_{Gas} - 0,055\ Q_{Susp} + 7,500\ B_{Susp} - 0,667\ M_{Träger} + 2,069\ T_{Gas} - 7$
   der Relation $127,5 \leq K \leq 202$ genügt.

2. Verfahren gemäß Anspruch 1, bei dem die Kennzahl K in einem Bereich von $136{,}0 \leq K \leq 193{,}5$ liegt und
$4500 \leq Q_{Gas}$ [m³/h] $\leq 7500$, $\qquad 1500 \leq Q_{Susp}$ [g/min] $\leq 3000$,
$5 \leq B_{Susp}$ [Gew.%] $\leq 15$, $\qquad 100 \leq M_{Träger}$ [kg] $\leq 200$,
$80 \leq T_{Gas}$ [°C] $\leq 115$
sind.

3. Verfahren gemäß Anspruch 2, bei dem die Kennzahl K in einem Bereich von $143 \leq K \leq 184{,}5$ liegt und
$5500 \leq Q_{Gas}$ [m³/h] $\leq 6500$, $\qquad 2000 \leq Q_{Susp}$ [g/min] $\leq 2500$,
$6 \leq B_{Susp}$ [Gew.%] $\leq 11$ $\qquad 120 \leq M_{Träger}$ [kg] $\leq 180$,
$90 \leq T_{Gas}$ [°C] $\leq 115$
sind.

4. Verfahren gemäß einem der Ansprüche 1 bis 3, wobei das zugeführte Gas Luft ist.

5. Verfahren gemäß einem der Ansprüche 1 bis 4, bei dem man eine zweite wässrige Suspension aus katalytisch aktivem Material und Bindemittel bereitstellt und auf den mit der ersten Suspension beschichteten fluidisierten Träger aufsprüht.

6. Verfahren gemäß Anspruch 5, wobei man den mit der ersten Suspension beschichteten Träger vor dem Aufsprühen der zweiten Suspension trocknet.

7. Verfahren gemäß einem der Ansprüche 1 bis 6, wobei man den teilchenförmige inerte Träger in Form von Kugeln, Zylindern, Ringen oder Säulen, vorzugsweise mit Abmessungen von 5 bis 15 mm, bereitstellt.

8. Verfahren gemäß einem der Ansprüche 1 bis 7, bei dem die Fließbettapparatur einen Behälter zu Aufnahme des teilchenförmigen Trägers, in dessen unterem Bereich eine schüsselartige Vertiefung vorgesehen ist, ein Zentralrohr zur Zufuhr des Gases, das sich in dem Behälter im wesentlichen axial nach unten erstreckt und in die Vertiefung mündet, einen im wesentlichen ringförmigen Abweisschirm, der in dem oberen Bereich des Behälters an dem Zentralrohr befestigt ist, und einen in dem unteren Bereich des Behälters angeordneten Leitring, der das Zentralrohr auf einem Teil seiner Länge im wesentlich konzentrisch umgibt, und Mitteln zum Einsprühen der ersten und gegebenenfalls zweiten Suspension umfasst.

9. Verfahren gemäß Anspruch 8, bei dem die erste oder zweite Suspension $TiO_2$ und $V_2O_5$-Teilchen enthält, wobei wenigstens 90 Vol.-% der $V_2O_5$-Teilchen einen Durchmesser von 20 μm oder weniger und wenigstens 95 Vol.-% der $V_2O_5$-Teilchen einen Durchmesser von 30 μm oder weniger aufweisen.

10. Verfahren gemäß einem der Ansprüche 1 bis 7, wobei man für die erste oder zweite Suspension $V_2O_5$-Teilchen oder gelöstes Vanadium verwendet.

11. Verwendung des nach einem der Ansprüche 1 bis 10 hergestellten Katalysators zur Herstellung von Phthalsäureanhydrid aus o-Xylol, Naphthalin oder Gemischen davon.

**Europäisches
Patentamt**

**EUROPÄISCHER RECHERCHENBERICHT**

Nummer der Anmeldung

EP 04 00 3444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | DE 40 06 935 A (WACKER CHEMIE GMBH) 12. September 1991 (1991-09-12) * Spalte 4, Zeile 34 - Zeile 62 * * Abbildung 1 * ----- | 1-10 | B01J23/22 B01J35/00 B01J37/02 C07C51/265 B01J2/16 |
| Y | DE 21 06 796 A (WACKER CHEMIE GMBH) 24. August 1972 (1972-08-24) * Seite 6, letzter Absatz * | 1-10 | |
| X | * Seite 7, letzter Absatz * * Seite 9, letzter Absatz * * Beispiele * ----- | 11 | |
| D,A | US 4 977 126 A (MAULDIN CHARLES H ET AL) 11. Dezember 1990 (1990-12-11) * Spalte 3, Zeile 53 - Spalte 4, Zeile 59 * ----- | 1-8 | |
| A | US 6 274 763 B1 (EBERLE HANS-JUERGEN ET AL) 14. August 2001 (2001-08-14) * das ganze Dokument * ----- | 1-10 | |
| | | | **RECHERCHIERTE SACHGEBIETE (Int.Cl.7)** B01J C07C |

Der vorliegende Recherchenbericht wurde für alle Patentansprüche erstellt

| Recherchenort | Abschlußdatum der Recherche | Prüfer |
|---|---|---|
| München | 13. Juli 2004 | Besselmann, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 04 00 3444

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 4006935 | A | 12-09-1991 | DE | 4006935 A1 | 12-09-1991 |
| DE 2106796 | A | 24-08-1972 | DE | 2106796 A1 | 24-08-1972 |
| | | | AT | 315136 B | 10-05-1974 |
| | | | BE | 779273 A1 | 11-08-1972 |
| | | | CA | 976142 A1 | 14-10-1975 |
| | | | CH | 565587 A5 | 29-08-1975 |
| | | | FR | 2125390 A5 | 29-09-1972 |
| | | | GB | 1385496 A | 26-02-1975 |
| | | | IT | 948477 B | 30-05-1973 |
| | | | NL | 7201246 A | 15-08-1972 |
| | | | US | 3799886 A | 26-03-1974 |
| US 4977126 | A | 11-12-1990 | AU | 623756 B2 | 21-05-1992 |
| | | | AU | 5220890 A | 03-10-1991 |
| | | | EP | 0453674 A1 | 30-10-1991 |
| | | | AU | 589806 B2 | 19-10-1989 |
| | | | AU | 7930687 A | 14-04-1988 |
| | | | CA | 1312066 C | 29-12-1992 |
| | | | CA | 2012682 A1 | 21-09-1991 |
| | | | DE | 3750154 D1 | 04-08-1994 |
| | | | DE | 3750154 T2 | 20-10-1994 |
| | | | EP | 0266898 A2 | 11-05-1988 |
| | | | JP | 2572079 B2 | 16-01-1997 |
| | | | JP | 63147545 A | 20-06-1988 |
| | | | NO | 874162 A ,B, | 05-04-1988 |
| | | | US | RE37406 E1 | 09-10-2001 |
| | | | US | 4962078 A | 09-10-1990 |
| | | | US | 5545674 A | 13-08-1996 |
| | | | US | 5128377 A | 07-07-1992 |
| US 6274763 | B1 | 14-08-2001 | DE | 19649426 A1 | 04-06-1998 |
| | | | AT | 200989 T | 15-05-2001 |
| | | | BR | 9713454 A | 28-03-2000 |
| | | | CN | 1238714 A ,B | 15-12-1999 |
| | | | DE | 59703523 D1 | 13-06-2001 |
| | | | WO | 9823371 A1 | 04-06-1998 |
| | | | EP | 0951351 A1 | 27-10-1999 |
| | | | ES | 2158609 T3 | 01-09-2001 |
| | | | JP | 2000505723 T | 16-05-2000 |
| | | | JP | 3416154 B2 | 16-06-2003 |
| | | | NO | 992553 A | 27-05-1999 |
| | | | TW | 394706 B | 21-06-2000 |

EPO FORM P0461

Für nähere Einzelheiten zu diesem Anhang : siehe Amtsblatt des Europäischen Patentamts, Nr.12/82